# EUROPEAN PATENT APPLICATION

(11) **EP 1 725 061 A2**
(43) Date of publication of application: **22.11.2006**
(21) Application number: 06008838.2
(22) Date of filing: 27.04.2006
(51) Int. Cl.: H04Q 7/38, H04B 7/26, H04L 12/28

(54) **Method and apparatus for positioning a portable subscriber station in a WiBro (Wireless Broadband) network, and repeater having the same**

(30) Priority: 19.05.2005 US 682470 P; 06.07.2005 KR 20050060767
(71) Applicant: Alogics Co., LTD., Seongnam-si, Gyeonggi-do (KR)
(72) Inventor: Chung, Sung-hyun, Bundang-gu Seongnam-si Gyeonggi-do (KR); Rim, Min-joong, Gangnam-gu Seoul (KR)
(74) Representative: Grünecker, Kinkeldey, Stockmair & Schwanhäusser Anwaltssozietät

(57) **Abstract**

Disclosed is a method and apparatus for positioning a portable subscriber station (PSS) using a WiBro repeater, and a repeater having the apparatus. The method of positioning the portable subscriber station in a network having a radio access station (RAS) and a repeater, includes the steps of: detecting a preamble signal transmitted from the RAS; generating a reference time by measuring a receiving time of the preamble signal and by compensating the receiving time of the preamble signal by taking into consideration a signal delay time between the RAS and the repeater; measuring a receiving time of a ranging signal received from the PSS on the basis of the reference time; and calculating the receiving time of the ranging signal by using a time stamp generated on the basis of the receiving time of the preamble signal.

## Description

### BACKGROUND OF THE INVENTION

This application claims the priority of US Provisional Patent Application No. 60/682,470, filed on May 19, 2005, in the United States Patent and Trademark Office, and the priority of Korean Patent Application No. 2005-60767, filed on July 6, 2005, in the Korean Intellectual Property Office, the disclosures of which are incorporated herein in their entireties by reference.

### 1. Field of the Invention

The present invention relates to a location based service (LBS) in a WiBro network and, more particularly, to a method and apparatus for positioning a portable subscriber station (PSS) by using a WiBro repeater, and a repeater having the same.

### 2. Description of Related Art

A wireless broadband (WiBro) Internet service or a portable Internet service is to provide high-data-rate wireless Internet access with portable subscriber station (PSS) under the stationary or mobile environment, anytime and anywhere. In more detail, the term "stationary or mobile" implies that it provides Internet access service to users while standing, walking, or moving in medium speed, e.g., in a speed of up to 60Km/h. The term "anytime and anywhere" implies that it provides seamless wireless Internet access inside or outside a building by using the PSS. In this case, a cell radius ranges up to 1 Km. The term "high-data-rate" implies that data is transmitted at a transmission speed of at least 1Mbps so that various high-speed wireless multimedia services can be provided. The term "wireless Internet" implies that an IP-based service is provided.

A currently available mobile phone provides a wide coverage area and high mobility, but does not provide IP-based high-speed data service efficiently. On the other hand, high-speed Internet and wireless LAN supports the IP-based high-speed data service, but provides a narrow coverage area and low mobility. However, the portable Internet provides IP-based content and is economical compared to the mobile phone. Further, the portable Internet can provide a wider coverage area compared to the high-speed Internet or wireless LAN, and is suitable for mobile communication environment. In these days, as users are increasingly using data-oriented communication services while moving from place to place frequently, the portable Internet attracts users' attention because of its low price, high-speed communication, IP-based service, and mobility.

The portable Internet allows users to receive in a wireless manner a high-speed Internet service, which has almost the same quality level as a service provided in a wireline manner, at a lower cost than the charge for a current mobile data service, and to have high-speed Internet access through any device, anytime and anywhere. On the other hand, the portable Internet allows communication service providers to establish an IP-based wireless network with high frequency efficiency that can provide a transmission speed of at least 1Mbps per subscriber, and to establish a large-scaled network in areas where Internet access is required.

A low-output repeater in the WiBro network is used to eliminate indoor dead spots and to improve service quality in areas where the portable Internet service is provided. The repeater is installed in a building or in a poor service area between a PSS and a radio access station (RAS) to repeat radio wave so that service quality can be improved and dead spots can be eliminated. That is, LBS is a technology that allows communication service providers to find the geographical location of mobile users, and based on this location information, provide services customized for the time zone or specific location where the user happens to be.

This means it can deliver personal navigation, mobile directory assistance services, mobile commerce (M-Commerce), interactive mobile gaming, bus/train schedule, traffic route optimization, restaurant finding, buddy finding, location-sensitive content service, roadside assistance, personal security, asset tracking, fleet tracking, logistics planning, stolen vehicle tracking, child and pet tracking, emergency 911 (E911), and medical emergency services as well as advertising specifically tailored to and based on a user's location.

In the above-mentioned portable Internet or WiBro network, examples of a positioning method performed in the conventional PSS include a method of using Global Positioning System (GPS), Time of Arrival (TOA) method, and Enhanced Observed Time Difference (E-OTD) method. In TOA method, positioning is carried out by measuring radio wave transmission time between the PSS and at least three RASs. In E-OTD method, positioning is carried out by measuring a relative arrival time difference between signals transmitted from the PSS to at least three RASs. On the other hand, examples of a positioning method performed in the RAS include Cell ID method, Angle of Arrival (AOA) method, Time of Arrival (TOA) method, and Time Difference of Arrival (TDOA) method. In Cell ID method, ID is assigned to a RAS and the position of the RAS is regarded as the position of a PSS when the PSS is registered in the RAS. In AOA method, positioning is carried out by measuring at least at two RASs the directional angles of signals transmitted from a PSS. In TOA method, positioning is carried out by measuring radio wave transmission times between a PSS and at least three RASs. In TDOA method, positioning is carried out by calculating an arrival time difference between signals transmitted from a PSS to at least three RASs.

However, in the WiBro network, the GPS signal may not be received in dead spots of city centers or buildings, and it is difficult for the PSS to receive signals from a plurality of RASs. In addition, a time delay caused by the repeater is longer than a time delay occurring in a wireless section. Further, it is difficult to accurately measure the time delay since the RAS cannot distinguish a signal transmitted from the repeater from other signals. Accordingly, accurate positioning is difficult.

### SUMMARY OF THE INVENTION

The present invention provides a method and apparatus for positioning a portable subscriber station (PSS) in a repeater of a WiBro network, and a repeater having the same.

According to an aspect of the present invention, there is provided a method of positioning a PSS in a network having a radio access station (RAS) and a repeater, the method including the operations of: detecting a preamble signal transmitted from the RAS; generating a reference time by measuring a receiving time of the preamble signal and by compensating the receiving time of the preamble signal by taking into consideration a signal delay time between the RAS and the repeater; measuring a receiving time of a ranging signal received from the PSS on the basis of the reference time; and calculating the receiving time of the ranging signal by using a time stamp generated on the basis of the receiving time of the preamble signal.

In the operation of generating the reference time, the previously calculated signal delay time between the RAS and the repeater may be added to the receiving time of the preamble signal to compensate the receiving time of the preamble signal.

The time stamp may be generated by counting the received data frame at predetermined intervals.

According to another aspect of the present invention, there is provided a method of positioning a PSS in a RAS, the method including the operations of: receiving information including an arrival time of a ranging signal from the PSS to a repeater; and comparing the received ranging signal and the arrival time of the ranging signal with previously stored information concerning the ranging signal to calculate ID of the PSS that corresponds to the ranging signal.

The information received in the operation of receiving information may include time stamp in predetermined units, number of the ranging signal, value of the ranging signal, and intensity of the ranging signal.

According to still another aspect of the present invention, there is provided an apparatus for positioning a PSS in a network having a RAS and a repeater, the apparatus including: a preamble signal detection section that detects a preamble signal transmitted from the RAS and measures a receiving time of the preamble signal; a delay compensation section that generates a reference time compensating the receiving time of the preamble signal by taking into consideration a signal delay time between the RAS and the repeater; a ranging signal detection section that measures a receiving time of a ranging signal from the PSS on the basis of the reference time; a time stamp generating section that generates a time stamp on the basis of the receiving time of the preamble signal; and a receiving time calculation section that calculates the receiving time of the ranging signal by using the time stamp.

The apparatus may further include a clock generating section that provides a clock signal that is a reference signal when the time stamp generating section generates the time stamp.

According to yet another aspect of the present invention, there is provided a repeater including: a signal repeating module that receives and repeats a signal from a RAS and a PSS; and a position location module that receives a preamble signal and a ranging signal from the RAS and the PSS, respectively, through the signal repeating module, and calculates a receiving time of the ranging signal on the basis of a reference time generated using a receiving time of the preamble signal.

The position location module may include: a preamble signal detection section that detects a preamble signal transmitted from the RAS and measures a receiving time of the preamble signal; a delay compensation section that compensates the receiving time of the preamble signal by taking into consideration a signal delay time between the RAS and the repeater to generate a reference time; a ranging signal detection section that measures a receiving time of a ranging signal from the PSS on the basis of the reference time; a time stamp generating section that generates a time stamp on the basis of the receiving time of the preamble signal; and a receiving time calculation section that calculates the receiving time of the ranging signal using the time stamp.

The position location module may be provided on each floor of a building, or separately provided inside and outside the building.

### BRIEF DESCRIPTION OF THE DRAWINGS

The above and other features and advantages of the present invention will become more apparent by describing in detail exemplary embodiments thereof with reference to the attached drawings in which:
FIG. 1 is a WiBro network according to an embodiment of the present invention, in which a PSS communicates with a repeater and a radio access station for communication;
FIGS. 2A and 2B are block diagrams of a system according to an embodiment of the present invention, in which a position location module is provided in or connected to a repeater to locate the position of a PSS;
FIG. 3 is a block diagram of a position location module inside a building;
FIG. 4 is a block diagram of a repeater and a position location module; and
FIG. 5 is a flow chart of a method of positioning a PSS according to an embodiment of the present invention.

### DETAILED DESCRIPTION OF THE INVENTION

Exemplary embodiments in accordance with the present invention will now be described in detail with reference to the accompanying drawings.

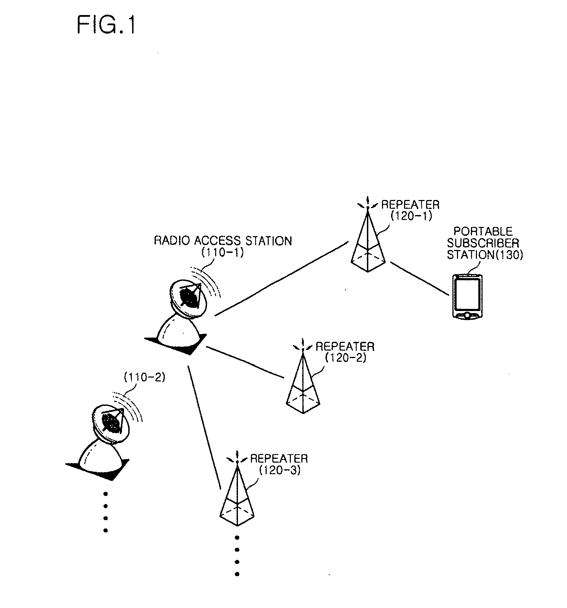

FIG. 1 is a WiBro network according to an embodiment of the present invention, in which a portable subscriber station (PSS) communicates with a repeater and a radio access station (RAS).

A plurality of RASs 110-1 and 110-2, a plurality of repeaters 120-1 to 120-3, and a PSS 130 are present in the WiBro network. In FIG. 1, the PSS 130 communicates with the RAS 110-1 through the repeater 120-1.

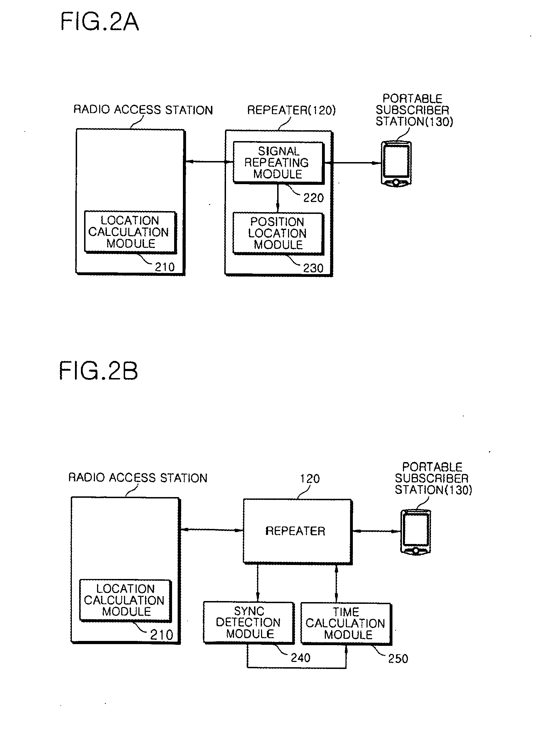

FIGS. 2A and 2B are block diagrams of a system according to an embodiment of the present invention, in which a position location module is provided in or connected to a repeater to locate the position of a PSS.

Referring to FIG. 2A, a location calculation module 210 and a position location module 230 are provided to locate the position of the PSS. The position location module 230 is incorporated in the repeater 120 to measure a receiving time of a ranging signal received from the PSS 130 on the basis of an absolute time obtained from a preamble signal received from the RAS 110. When information concerning the measured time is transmitted to the RAS 110, the location calculation module 210 of the RAS 110 calculates the position of the PSS 130 using the time information. The position location module 230 may be incorporated in the RAS 110 other than the repeater 210.

Referring to FIG. 2B, the position location module 230 may be separately provided from the repeater 120. In addition, the position location module 230 may include a Sync detection module 240 and a time calculation module 250. The Sync detection module 240 provides a time division duplex (TDD) timing reference to the repeater 120. That is, the Sync detection module 240 detects a preamble signal from a signal received from a RAS at every 5ms interval and provides accurate time to the repeater 120. In other words, since the repeater 120 alternately transmits and receives data based on the TDD method, it has to know when to transmit and receive the data. Accordingly, the TDD timing reference is provided to provide a transmit start time and a receive start time.

The Sync detection module 240 counts 5ms frames to generate a time stamp. The calculated time is compensated with a time delay between the RAS 110 and the repeater 120, which is obtained when the repeater 120 is installed. The time calculation module 250 measures a receiving time of a ranging signal received from the PSS 130 with the compensated time.

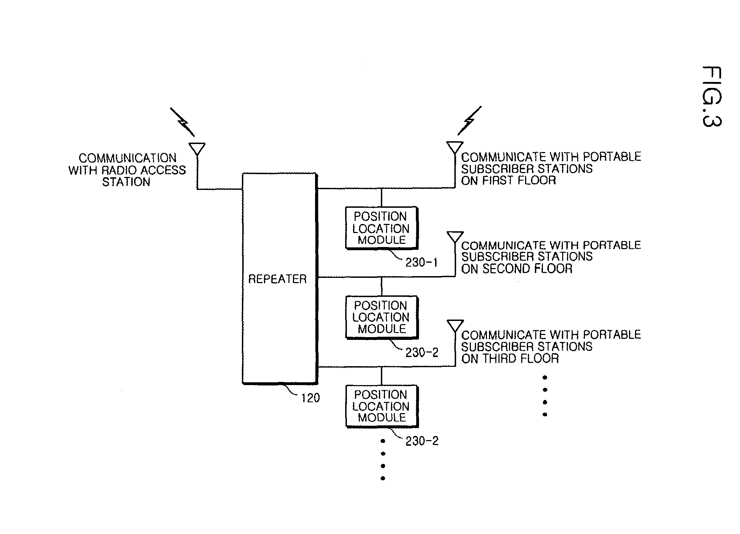

FIG. 3 is block diagram of the position location module inside a building.

When only a single position location module is present inside a building, it cannot be determined on which floor a PSS is present. Thus, the position location modules 230-1 to 230-3 have to be provided on each floor to determine on which floor the PSS is present.

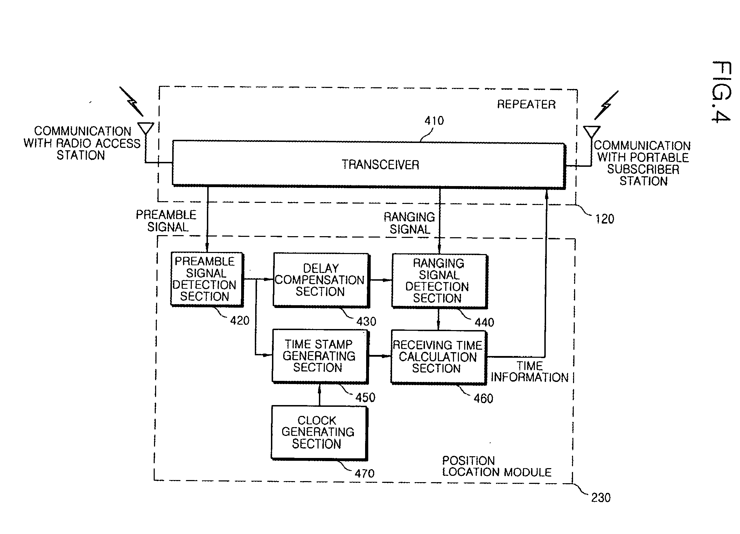

FIG. 4 is a block diagram of the repeater and the position location module.

The repeater 120 includes a transceiver 410 that transmits/receives data to/from the RAS 120 and the PSS 130. The repeater 120 transmits a preamble signal from the RAS 110 to the position location module 230, and transmits a ranging signal from the PSS 130 to the position location module 230. The preamble signal is one transmitted by the RAS 110 at regular intervals. For example, the RAS 110 transmits a predetermined value assigned thereto at intervals of 5ms. The ranging signal is one used when the PSS 130 transmits data or notifies that it is in an active state. The ranging signal transmits a predetermined value at regular intervals. The RAS 110 sends to the PSS 130 an instruction to transmit a predetermined value (ranging code) at predetermined intervals. The PSS 130 transmits the ranging code in response to the instruction. The ranging code may be one of 256 values.

The position location module 230 includes a preamble signal detection section 420, a delay compensation section 430, a ranging signal detection section 440, a time stamp generating section 450, a receiving time calculation section 460, and a clock generating section 470. The preamble signal detection section 420 detects the preamble signal received from the RAS 110 and calculates an arrival time (reference time) of the preamble signal. The calculated time is compensated by the delay compensation section 430. The compensated value is a signal arrival time between the RAS and the repeater, which is calculated beforehand when the repeater is installed. The delay compensation section 430 adds the delayed value to the arrival time of the preamble signal to make a compensation.

The time stamp generating section 450 uses the reference time calculated from the detected preamble signal to generate a time stamp. The ranging signal detection section 440 detects the ranging signal from the PSS 130. The receiving time calculation section 460 calculates the receiving time of the ranging signal with reference to the reference time that is calculated from the arrival time of the preamble signal and then compensated. Information concerning the receiving time of the ranging signal thus calculated is transmitted to the RAS 110. The RAS 110 calculates the position of the PSS 130 by using the time information.

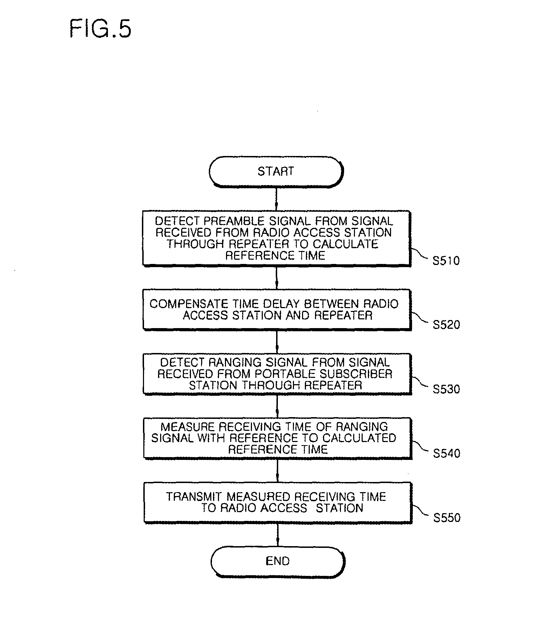

FIG. 5 is a flow chart of a method of positioning a PSS according to an embodiment of the present invention.

A preamble signal is detected from a signal received from a RAS through a repeater to calculate a reference time (operation S150). That is, an arrival time of the preamble signal becomes the reference time. A time delay between the RAS and the repeater, which is measured beforehand, is added to the reference time to compensate the reference time (operation 5520). A ranging signal is detected from a signal received from the PSS through the repeater (operation S530). A receiving time of the ranging signal is measured with reference to the compensated reference time (operation S540). A time stamp that is a reference for measuring the receiving time of the ranging signal is generated using the arrival time of the preamble signal. The measured receiving time is transmitted to the RAS (operation S550).

In more detail, while monitoring an uplink signal received from the PSS 130, the position location module 230 detects the ranging signal received from the PSS 130 at intervals of 5ms, and collects data concerning code, intensity, and timing of the detected ranging signal. The timing is measured on the basis of the reference time obtained by detecting the preamble signal received from the RAS 110. The position location module 230 adds the time stamp to the data concerning the collected ranging signal, collects the data in predetermined units, and transmits the data to the RAS 110 through the repeater 120. Table 1 shows information transmitted by the PSS 130.

**[Table 1]**

| Time Stamp | 53 | 54 | 55 | 56 | 57 | 58 |
|---|---|---|---|---|---|---|
| Code | | | 23 | 11, 52 | | |

The data transmitted from the repeater 120 are a time stamp in units of 5ms, number of the ranging signal among numbers of 0 to 256, a code of the ranging signal, signal intensity, and the like.

The position calculation module 210 of the RAS 110 calculates the position of the PSS 130 by using the data received from the position location module 230. When receiving the ranging signal, the RAS 110 transmits/receives ranging-response and ranging-request signals to detect which PSS has transmitted the ranging signal. The RAS 110 stores the ranging code and the PSS ID. When the repeater 120 transmits information, the RAS 110 compares it with the stored data. As a result, the RAS 110 can determine which PSS is located in a coverage area of a repeater, and also determine a distance between the repeater and the PSS, thereby estimating the position of the PSS. Table 2 shows information received by the RAS 110.

**[Table 2]**

| Time Stamp | 53 | 54 | 55 | 56 | 57 | 58 |
|---|---|---|---|---|---|---|
| Code | 27 | 56 | 14, 23 | 11, 52, 88 | | 25, 39 |
| PSS ID | | | 128 | | | |

On the other hand, the above-mentioned positioning method can be written in a computer program. Codes and code segments constituting the program can be easily deduced by computer programmers in the art. The program is stored in computer readable mediums, read and executed by the computer to implement the positioning method. Examples of the computer readable mediums include a magnetic recording medium, an optical recording medium, and a carrier wave medium.

As apparent from the above description, according to the present invention, it is possible to perform a positioning operation more accurately than using a PSS or a RAS. Further, since the RAS offers information and an extra positioning apparatus performs a positioning operation without the need to change the configuration of a conventional PSS or RAS, it is possible to perform a positioning operation accurately without greatly increased cost.

While the present invention has been described with reference to exemplary embodiments thereof, it will be understood by those skilled in the art that various changes in form and details may be made therein without departing from the scope of the present invention as defined by the following claims.

## Claims

1. A method of positioning a Portable Subscriber Station (hereinafter referred to as 'PSS') in a network having a Radio Access Station (hereinafter referred to as 'RAS') and a repeater, the method comprising the operations of:
detecting a preamble signal transmitted from the RAS;
generating a reference time by measuring a receiving time of the preamble signal and by compensating the receiving time of the preamble signal by taking into consideration a signal delay time between the RAS and the repeater;
measuring a receiving time of a ranging signal received from the PSS on the basis of the reference time; and
calculating the receiving time of the ranging signal by using a time stamp generated on the basis of the receiving time of the preamble signal.

2. The method of claim 1, wherein in the operation of generating the reference time, the previously calculated signal delay time between the RAS and the repeater is added to the receiving time of the preamble signal to compensate the receiving time of the preamble signal.

3. The method of claim 1, wherein the time stamp is generated by counting the received data frame at predetermined intervals.

4. A method of positioning a PSS in a RAS, the method comprising the operations of:
receiving information including an arrival time of a ranging signal from the PSS to a repeater; and
comparing the received ranging signal and the arrival time of the ranging signal with previously stored information concerning the ranging signal to calculate ID of the PSS that corresponds to the ranging signal.

5. The method of claim 4, wherein the information received in the operation of receiving information includes time stamp in predetermined units, number of the ranging signal, value of the ranging signal, and intensity of the ranging signal.

6. An apparatus for positioning a PSS in a network having a RAS and a repeater, the apparatus comprising:
a preamble signal detection section that detects a preamble signal transmitted from the RAS and measures a receiving time of the preamble signal;
a delay compensation section that generates a reference time compensating the receiving time of the preamble signal by taking into consideration a signal delay time between the RAS and the repeater;
a ranging signal detection section that measures a receiving time of a ranging signal from the PSS on the basis of the reference time;
a time stamp generating section that generates a time stamp on the basis of the receiving time of the preamble signal; and
a receiving time calculation section that calculates the receiving time of the ranging signal by using the time stamp.

7. The apparatus of claim 6, further comprising a clock generating section that provides a clock signal that is a reference signal when the time stamp generating section generates the time stamp.

8. A repeater comprising:
a signal repeating module that receives and repeats a signal from a RAS and a PSS; and
a position location module that receives a preamble signal and a ranging signal from the RAS and the PSS, respectively, through the signal repeating module, and calculates a receiving time of the ranging signal on the basis of a reference time generated using a receiving time of the preamble signal.

9. The repeater of claim 8, wherein the position location module comprises:
a preamble signal detection section that detects a preamble signal transmitted from the RAS and measures a receiving time of the preamble signal;
a delay compensation section that compensates the receiving time of the preamble signal by taking into consideration a signal delay time between the RAS and the repeater to generate a reference time;
a ranging signal detection section that measures a receiving time of a ranging signal from the PSS on the basis of the reference time;
a time stamp generating section that generates a time stamp on the basis of the receiving time of the preamble signal; and
a receiving time calculation section that calculates the receiving time of the ranging signal using the time stamp.

10. The repeater of claim 8, wherein the position location modules are provided on each floor of a building, or separately provided inside and outside the building.
